# FASCICULE DE BREVET EUROPEEN

(11) **EP 4 111 034 B1**
(45) Date de publication et mention de la délivrance du brevet: **07.05.2025**
(21) Numéro de dépôt: 21711013.9
(22) Date de dépôt: 19.02.2021
(51) Int. Cl.: F01D 9/04, F01D 11/00, F01D 11/08

(54) **ETANCHEITE D'UN ANNEAU DE TURBINE EN COMPOSITE A MATRICE CERAMIQUE**
ABDICHTUNG EINES TURBINENRINGS AUS EINEM KERAMIKMATRIXVERBUNDWERKSTOFF
SEALING OF A TURBINE RING MADE OF A CERAMIC MATRIX COMPOSITE

(30) Priorité: 24.02.2020 FR 2001805
(43) Date de publication de la demande: 04.01.2023
(73) Titulaire: Safran Ceramics, 33185 Le Haillan (FR)
(72) Inventeur: CARLIN, Maxime, François, Roger, 77550 MOISSY-CRAMAYEL (FR); LYPRENDI, Adèle, 77550 MOISSY-CRAMAYEL (FR); HENNE, Jean-François, 77550 MOISSY-CRAMAYEL (FR); PIN, Lisa, 77550 MOISSY-CRAMAYEL (FR)
(74) Mandataire: Ernest Gutmann - Yves Plasseraud S.A.S.
(86) Numéro de dépôt international: PCT/FR2021/050303
(87) Numéro de publication internationale: WO 2021/170944

(56) Documents cités:
- EP-A2- 1 432 571
- FR-A1- 3 012 064
- FR-A1- 3 034 454
- FR-A1- 3 041 993
- US-A1- 2016 215 646

## Description

### Domaine technique de l'invention

Le présent document concerne l'étanchéité inter-secteurs dans une turbomachine.

### Etat de la technique antérieure

Afin de réduire la consommation de carburant et de diminuer l'impact carbone, une des premières solutions avancées est de réduire la masse des aéronefs. A cette fin, les avionneurs s'orientent vers l'utilisation de matériaux composites présentant une densité inférieure à celle des matériaux métalliques classiquement employés.

La deuxième solution permettant de diminuer la consommation en carburant est d'augmenter le rendement des turboréacteurs, ce qui implique une augmentation de la température des gaz de combustion. Or les matériaux métalliques, et plus particulièrement les alliages à base de Nickel ou de cobalt, utilisés actuellement dans les turbomachines, atteignent leur limite en température de sorte qu'une augmentation de la température de combustion n'est pas envisageable. En effet, les pièces thermostructurales de turbomachine doivent présenter de bonnes propriétés mécaniques dans des environnements difficiles : très haute températures, hautes pressions, atmosphères riches en vapeur d'eau et oxydantes.

Pour apporter une solution au problème de masse et à celui de la température, il est possible d'utiliser des matériaux CMC. Les composites à matériau céramique (CMC), ayant une densité comprise entre 2 et 3, ont l'avantage d'être plus légers que les alliages à base nickel ou cobalt de plus forte densité.

Les CMC les plus avancés utilisés à ce jour sont ceux constitués de matrice et fibres de carbure de silicium SiC. Bien qu'ils soient constitués de matériaux (matrice, fibre, interphase) fragiles, les CMC sont des matériaux robustes grâce à leur structure et leur architecture. En effet, l'interphase déposée sur la fibre permet de dévier les fissures alors que la matrice permet de protéger les fibres et les interphases.

Dans une turbomachine, il est connu de réaliser les distributeurs de turbine ou les anneaux entourant les rangées annulaires d'aubes mobiles en CMC avec des matrices et fibres en carbure de silicium SiC (appelé CMC à base de SiC par la suite). Un distributeur comprend une plateforme annulaire interne et une plateforme annulaire externe reliées l'une à l'autre par des aubes radiales. Ces plateformes forment des anneaux tout comme les anneaux entourant les rangées annulaires d'aubes mobiles Ces anneaux sont fixés au carter métallique d'une manière bien connue de l'homme du métier.

Ces secteurs d'anneaux sont agencés circonférentiellement bout à bout et l'étanchéité à la jonction circonférentielle de ceux-ci est réalisée par des organes d'étanchéité tels que des languettes ce qui permet de limiter les fuites d'air inter-secteurs. Ces languettes métalliques sont insérées pour moitié dans un bord circonférentiel d'un premier secteur d'anneau et pour l'autre moitié dans un bord circonférentiel d'un second secteur d'anneau circonférentiellement adjacent au premier secteur d'anneau.

Classiquement, les languettes peuvent être réalisées en alliage de Nickel ou de Cobalt.

De nombreux travaux ont étudié la réactivité entre SiC et de nombreux métaux dont le nickel Ni et le cobalt Co. En effet, le nickel Ni et le cobalt Co réagissent avec le silicium pour former des siliciures fragiles qui s'accompagne d'une précipitation de carbone sous forme de feuillets graphitiques fragilisant le système (CMC à base SiC / Métal). Le nickel ou le cobalt en présence de SiC peut donner, en fonction de la concentration en silicium et de la température, des siliciures du Nickel ou du Cobalt. Ce problème de réactivité est d'autant plus important que le système doit fonctionner à haute température. En effet, la température élevée favorise la croissance de couche de réaction ce qui provoque une évolution de la chimie non contrôlée, ce qui est dommageable à la tenue mécanique du système. Il a aussi été observé que de nombreuses fissures pouvaient apparaitre aux niveau des interfaces réactives ce qui tend à fragiliser le système. En outre, sous chargement mécanique, ces fissures dans la matrice peuvent constituer un réseau privilégié de propagation des espèces oxydantes (O₂, H₂O) au sein du matériau. Ces espèces oxydantes diffusent au travers des microfissures et le détériore par oxydation/corrosion. Cela affecte la durabilité des CMC à long terme : ces réactions d'oxydation modifient les propriétés de structure et diminue notablement leurs propriétés mécaniques.

Autrement dit, l'alliage métallique de la languette réagit avec le matériau en CMC à base de carbure de silicium SiC et donne des siliciures. Ces siliciures modifient la chimie à l'interface du matériau en CMC à base de SiC faisant apparaître des microfissures par lesquelles peuvent passer des molécules oxydantes tel que O₂ et H₂O et oxyder c'est-à-dire corroder le matériau CMC à base SiC. Les alliages métalliques sont également connus pour s'oxyder. Les documents FR3034454A1 et FR3041993A1 montrent des anneaux de turbines de l'art antérieur.

### Présentation de l'invention

A cet effet, le présent document concerne un assemblage dans une turbine comprenant :
- au moins un anneau de turbine en composite à matériau céramique avec une matrice et des fibres de carbure de silicium SiC, l'anneau comportant une pluralité de secteurs, agencés circonférentiellement bout à bout, chacun des secteurs d'anneaux comprend au moins un bord circonférentiel munie d'au moins une fente débouchant circonférentiellement,
- au moins un organe d'étanchéité étant inséré pour une première partie dans une desdites fentes d'un bord d'un premier secteur d'anneau et pour une seconde partie dans l'une desdites fentes d'un bord d'un second secteur d'anneau, circonférentiellement adjacent au premier secteur d'anneau,
l'assemblage étant caractérisé en ce que l'organe d'étanchéité est en matériau composite à matrice céramique avec une matrice et des fibres en oxydes.

Afin d'éviter la formation de ces siliciures, l'organe d'étanchéité classiquement en métal à base de Ni ou Co de l'art antérieur est ainsi remplacée par des CMC.

Ledit organe d'étanchéité peut être en matériau composite à matrice céramique avec une matrice et des fibres en oxydes.

Le matériau en CMC à matrice et fibres en oxydes (aussi appelé CMC oxydes) est stable jusqu'à de hautes températures ce qui permet d'éviter des problèmes d'oxydation/corrosion. Par ailleurs, ledit organe d'étanchéité en CMC oxydes a la propriété d'être inerte vis-à-vis des interactions chimiques avec le carbure de silicium SiC à haute température, est étanche à l'air et mécaniquement compatible avec le CMC à base de SiC. Enfin, le remplacement de l'organe d'alliage métallique par un organe en CMC oxydes représente un net gain de masse de par la faible densité que représente ce matériau et donc une diminution des émissions polluantes. Ledit matériau composite de l'organe d'étanchéité peut comprendre des fibres d'alumine et une matrice d'alumino-silicate.

L'organe d'étanchéité peut présenter une épaisseur inférieure à 1 mm d'épaisseur.

Le CMC oxydes est un matériau capable d'être réalisé sous forme de plaques de quelques dixièmes de mm d'épaisseur. Cette faible épaisseur permet d'autant plus de garantir une étanchéité des deux secteurs d'anneau.

L'organe d'étanchéité peut être un organe d'étanchéité de forme sensiblement plane. Il peut alors être qualifié de languette.

Cette planéité facilite l'étanchéité et permet, de par sa forme, de limiter les fuites d'air. L'anneau peut entourer extérieurement une rangée annulaire d'aubes mobiles et être porté par un carter externe.

Ledit assemblage peut comprendre une rangée annulaire d'aubes statoriques comportant une plateforme annulaire interne et externe, l'une au moins de la plateforme annulaire interne et externe étant formée par ledit anneau.

L'organe d'étanchéité peut être disposé entre deux bords circonférentiels de deux secteurs adjacents d'anneau de turbine, ledit organe d'étanchéité étant caractérisé en ce qu'il est réalisé en matériau composite à matrice céramique.

Le présent document sera mieux compris et d'autres détails, caractéristiques et avantages du présent document apparaîtront à la lecture de la description suivante faite à titre d'exemple non limitatif en référence aux dessins annexés.

### Brève description des figures

[Fig. 1] est une vue en perspective d'un anneau de turbine.
[Fig. 2] est une vue en perspective d'un distributeur de turbine.
[Fig. 3] est une vue en perspective d'un organe d'étanchéité selon l'invention.

### Description détaillée de l'invention

Classiquement dans une turbomachine, une roue mobile de la turbine est entourée extérieurement par un anneau de support d'un matériau abradable. L'anneau est fixé à un carter externe et est formé d'une pluralité de secteurs agencés circonférentiellement bout à bout.

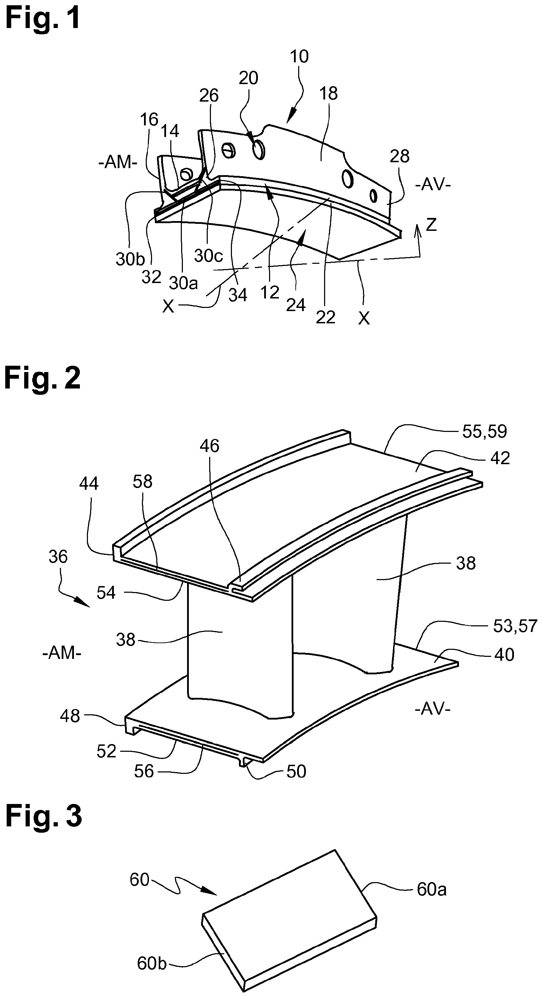

La figure 1 illustre un tel secteur d'anneau 10 d'une turbine de turbomachine, l'anneau étant en CMC avec une matrice et des fibres de carbure de silicium SiC. Ce secteur d'anneau 10 comprend une portion 12 de paroi annulaire, ici cylindrique, comportant une face radialement externe 14 à partir de laquelle s'étendent, radialement vers l'extérieur, une première paroi annulaire radiale 16 amont AM et une seconde paroi annulaire radiale 18 aval AV. Les première paroi annulaire radiale 16 amont et seconde paroi annulaire radiale 18 aval sont munies d'orifices 20 destinés à la fixation du secteur d'anneau 10 au carter externe de la turbine par boulonnage. Le secteur d'anneau 10 porte sur une face radialement interne 22 de la portion 12 de paroi annulaire cylindrique, une couche de matériau abradable 24 destiné à coopérer avec les extrémités radialement externes des aubes de la roue mobile aubagée.

Chaque secteur d'anneau 10 présente deux bords circonférentiellement opposés 26, 28, venant en vis-à-vis avec un bord circonférentiel d'un secteur d'anneau adjacent. Chaque bord circonférentiel 26, 28 d'un secteur d'anneau 10 présente au moins une fente, dans le cas échéant trois fentes 30a, 30b, 30c débouchant circonférentiellement en direction d'un secteur d'anneau adjacent, et en vis-à-vis d'une fente dudit secteur d'anneau adjacent.

Dans un mode de réalisation particulier, chaque bord circonférentiel 26, 28 comprend une première fente longitudinale 30a s'étendant parallèlement à un axe X de rotation de la turbomachine.

L'extrémité circonférentielle 26, 28 comprend également une deuxième et une troisième fentes inclinées en oblique 30b, 30c, s'étendant selon une composante longitudinale X et une composant radiale Z. Les deuxième et troisième fentes 30b, 30c débouchent radialement vers l'intérieur dans la première rainure longitudinale 30a, et s'étendent radialement vers l'extérieur au moins pour partie dans l'épaisseur des parois annulaires radiales amont 16 et aval 18. La deuxième fente 30b et la troisième fente 30c s'écartent l'une de l'autre en allant radialement vers l'extérieur. La deuxième fente 30b s'étend ainsi vers un bord amont 32, et la troisième fente 30c vers un bord aval 34, du secteur d'anneau 10.

Ces première, deuxième et troisième fentes 30a, 30b, 30c sont destinées à recevoir un organe d'étanchéité 60 qui est dans la réalisation représentée à la figure 3 de forme sensiblement plane. Cet organe d'étanchéité peut être qualifié de languette. Ces languettes d'étanchéité sont ainsi insérées dans les fentes 30a, 30b, 30c aux extrémités circonférentielles 26, 28 des secteurs d'anneau. Les languettes d'étanchéité sont insérées pour partie dans les fentes 30a, 30b, 30c d'une extrémité circonférentielle 26, 28 d'un secteur d'anneau 10 et pour partie dans les fentes de l'extrémité circonférentielle d'un secteur d'anneau adjacent. Ces languettes d'étanchéité permettent de garantir l'étanchéité entre deux secteurs d'anneau 10 adjacents. La figure 2 illustre un exemple d'un secteur de distributeur 36 de turbine. Classiquement, un distributeur comprend une rangée annulaire d'aubes 38 sensiblement radiales reliées à leurs extrémités radialement interne par une plateforme annulaire interne ou anneau interne 40 et à leurs extrémités radialement externe par une plateforme annulaire externe ou anneau externe 42. Le distributeur comprend plusieurs secteurs 36 assemblés circonférentiellement les uns aux autres, chaque secteur 36 comprenant plusieurs aubes 38 et un secteur d'anneau interne 40 ou secteur de plateforme interne et un secteur d'anneau externe 42 ou secteur de plateforme externe.

De manière similaire à ce qui a été décrit en référence à la figure 1, chaque secteur d'anneau interne 40 et externe 42 comprend deux bords circonférentiels 52, 53, 54, 55 comportant chacun au moins une fente 56, 58, dont deux d'entre elles ne sont pas visibles, dans laquelle sont engagées des moyens d'étanchéité telles que des languettes 60. Ces languettes 60 sont insérées pour partie dans les fentes 56, 57, 58, 59 d'une extrémité circonférentielle d'un secteur de plateforme annulaire interne 40 ou externe 42 et pour partie dans les fentes 56, 58, de l'extrémité circonférentielle d'un secteur de plateforme annulaire interne 40 ou externe 42 respectivement. Ces dernières garantissent également l'étanchéité entre deux secteurs. Les secteurs de plateforme annulaire interne 40 et externe 42 formant chacun un anneau. Comme indiqué précédemment, les languettes d'étanchéité sont communément réalisées en un matériau métallique, plus particulièrement un alliage à base de nickel ou de cobalt qui à forte température réagit avec le matériau CMC du secteur d'anneau 10, 40, 42. Comme indiqué précédemment, l'utilisation de languettes en matériau métallique pose des difficultés en terme de formation de siliciure et d'oxydation.

Selon le présent document, il est proposé de réaliser les languettes 60 en CMC et, plus particulièrement, avec une matrice et fibres en oxydes. Typiquement, la fibre est en alumine et la matrice en alumino-silicate. La languette 60 présente deux bords circonférentiels 60a, 60b aptes à venir s'insérer dans lesdites fentes 30a, 30b, 30c, 56, 58.

Ladite languette 60 présente une épaisseur inférieure à 1 mm d'épaisseur et est de forme sensiblement plane. En effet de par les propriétés des CMC oxydes, il est possible de réaliser les languettes sous forme de plaques de quelques dixièmes de mm d'épaisseur. L'épaisseur totale étant ainsi faible, cela facilite d'autant plus la réalisation de l'étanchéité des deux secteurs d'anneau. La planéité permet aussi, quant à elle, de limiter les fuites d'air.

## Revendications

1. Assemblage dans une turbine comprenant :
- au moins un anneau de turbine en composite à matériau céramique avec une matrice et des fibres de carbure de silicium SiC, l'anneau comportant une pluralité de secteurs (10, 36), agencés circonférentiellement bout à bout, chacun des secteurs d'anneaux (10, 40, 42) comprend au moins un bord circonférentiel (26, 28, 52, 53, 54, 55) munie d'au moins une fente (30a, 30b, 30c, 56, 58) débouchant circonférentiellement,
- au moins un organe d'étanchéité (60) étant inséré pour une première partie dans une desdites fentes (30a, 30b, 30c, 56, 58) d'un bord d'un premier secteur d'anneau et pour une seconde partie dans l'une desdites fentes (30a, 30b, 30c, 56, 58) d'un bord d'un second secteur d'anneau, circonférentiellement adjacent au premier secteur d'anneau,
l'assemblage étant **caractérisé en ce que** l'organe d'étanchéité (60) est en matériau composite à matrice céramique avec une matrice et des fibres en oxydes.

2. Assemblage selon la revendication 1, dans lequel le matériau composite de l'organe d'étanchéité (60) comprend des fibres d'alumine et une matrice d'alumino-silicate.

3. Assemblage selon l'une quelconque des revendications précédentes, dans lequel ledit organe d'étanchéité (60) présente une épaisseur inférieure à 1 mm d'épaisseur.

4. Assemblage selon l'une des revendications précédentes, dans lequel l'organe d'étanchéité (60) est un organe d'étanchéité de forme sensiblement plane.

5. Assemblage selon l'une des revendications précédentes, dans lequel l'anneau entoure extérieurement une rangée annulaire d'aubes mobiles et est porté par un carter externe.

6. Assemblage selon l'une des revendications 1 à 4, dans lequel il comprend une rangée annulaire d'aubes (38) statoriques comportant une plateforme annulaire interne (40) et externe (42), l'une au moins de la plateforme annulaire interne (40) et externe (42) étant formée par ledit anneau.

## Patentansprüche

1. Anordnung in einer Turbine, umfassend:
- zumindest einen Turbinenring aus einem Verbundwerkstoff mit keramischem Material mit einer Matrix und Fasern aus Siliziumkarbid SiC, wobei der Ring eine Vielzahl von Sektoren (10, 36) aufweist, die in Umfangsrichtung auf Stoß angeordnet sind, wobei jeder der Ringsektoren (10, 40, 42) zumindest eine Umfangskante (26, 28, 52, 53, 54, 55) aufweist, die mit zumindest einem in Umfangsrichtung mündenden Schlitz (30a, 30b, 30c, 56, 58) versehen ist,
- wobei zumindest ein Dichtungsorgan (60) zu einem ersten Teil in einen der Schlitze (30a, 30b, 30c, 56, 58) einer Kante eines ersten Ringsektors und zu einem zweiten Teil in einen der Schlitze (30a, 30b, 30c, 56, 58) einer Kante eines zweiten Ringsektors, der in Umfangsrichtung an den ersten Ringsektor angrenzt, eingesetzt ist,
wobei die Anordnung **dadurch gekennzeichnet ist, dass** das Dichtungsorgan (60) aus einem Verbundmaterial mit keramischer Matrix mit einer Matrix und Fasern aus Oxiden besteht.

2. Anordnung nach Anspruch 1, wobei das Verbundmaterial des Dichtungsorgans (60) Fasern aus Aluminiumoxid und eine Matrix aus Aluminiumsilikat enthält.

3. Anordnung nach einem der vorhergehenden Ansprüche,
wobei das Dichtungsorgan (60) eine Dicke von weniger als 1 mm Dicke aufweist.

4. Anordnung nach einem der vorhergehenden Ansprüche,
wobei das Dichtungsorgan (60) ein Dichtungsorgan mit im Wesentlichen ebener Form ist.

5. Anordnung nach einem der vorhergehenden Ansprüche,
wobei der Ring außenseitig eine ringförmige Reihe von Laufschaufeln umgibt und von einem Außengehäuse getragen wird.

6. Anordnung nach einem der Ansprüche 1 bis 4,
wobei sie eine ringförmige Reihe von Statorschaufeln (38) mit einer inneren (40) und einer äußeren ringförmigen Plattform (42) umfasst, wobei zumindest eine der inneren (40) und der äußeren ringförmigen Plattform (42) aus dem Ring gebildet ist.

## Claims

1. An assembly in a turbine comprising:
- at least one turbine ring made of ceramic material composite with a matrix and silicon carbide SiC fibres, the ring including a plurality of sectors (10, 36), arranged circumferentially end-to-end, each of the ring sectors (10, 40, 42) comprises at least one circumferential edge (26, 28, 52, 53, 54, 55) provided with at least one slot (30a, 30b, 30c, 56, 58) opening out circumferentially,
- at least one sealing member 60 being inserted for a first portion into one of said slots (30a, 30b, 30c, 56, 58) of an edge of a first ring sector and for a second portion into one of said slots (30a, 30b, 30c, 56, 58) of an edge of a second ring sector, circumferentially adjacent to the first ring sector,
the assembly being **characterised in that** the sealing member 60 is made of composite material with a ceramic matrix with a matrix and oxide fibres.

2. The assembly according to claim 1, wherein the composite material of the sealing member 60 comprises alumina fibres and an alumino-silicate matrix.

3. The assembly according to any one of the preceding claims, wherein said sealing member 60 has a thickness of less than 1 mm.

4. The assembly according to one of the preceding claims, wherein the sealing member 60 is a sealing member with a substantially planar shape.

5. The assembly according to one of the preceding claims, wherein the ring externally surrounds an annular row of moving vanes and is carried by an outer casing.

6. The assembly according to one of claims 1 to 4, wherein it comprises an annular row of stator vanes 38 including inner 40 and outer 42 annular platforms, at least one amongst the inner 40 and outer 42 annular platforms being formed by said ring.
